# EUROPEAN PATENT APPLICATION

(11) **EP 4 503 813 A1**
(43) Date of publication of application: **05.02.2025**
(21) Application number: 22939373.1
(22) Date of filing: 29.04.2022
(51) Int. Cl.: H04W 72/12, H04W 24/10, H04W 88/08

(54) **WLAN COMMUNICATION METHOD, ACCESS POINT, CLIENT, COMPUTING DEVICE AND STORAGE MEDIUM**

(71) Applicant: Siemens Aktiengesellschaft, 80333 München (DE)
(72) Inventor: WANG, Li, Beijing 100102 (CN); LAMPE, Mattias, Beijing 100102 (CN); ZHANG, Jie, Beijing 100102 (CN); MA, Wan Li, Beijing 100102 (CN)
(74) Representative: Isarpatent
(86) International application number: PCT/CN2022/090646
(87) International publication number: WO 2023/206526

(57) **Abstract**

The present disclosure relates to a WLAN communication method, an access point, a client, a computing device and a storage medium. The WLAN communication method comprises: an access point simultaneously sending a polling request message to one or more clients among clients, which are associated with the access point; the access point sequentially receiving polling response messages, which are sent by the one or more clients; each time a polling response message is received, the access point sending an acknowledgement (ACK) message to the corresponding client; and after the access point receives polling response messages from all the clients or a preset latest response time for the last client is reached, repeating the above operations starting from the access point sending polling request messages to the clients.

## Description

### Technical field

The present disclosure relates in general to the technical field of wireless communication, and in particular to a WLAN communication method, an access point, a client, a computing device and a storage medium.

### Background art

From consumer products to industrial devices, WLAN (802.11a/b/g/n/ac/ax) technology is very popular at present. Communication in consumer products prioritizes high speed and high throughput, whereas industrial communication has higher requirements regarding low delay and low jitter. Industrial communication protocols, such as PROFINET, have higher requirements regarding jitter, and mainstream WLAN technology struggles to meet these requirements. Due to the CSMA/CA (Carrier-sense multiple access with collision avoidance) mechanism that is native to WLAN, WLAN devices cannot transmit data before successfully competing for channel access rights. Having a large number of WLAN devices on the same channel will increase the channel access contention time, and means that there will be huge variation in channel access delays. Such random access means that WLAN technology cannot provide determinate communication. Furthermore, the market for consumer products is much larger than the industrial market, so there is a greater driving force for increasing the throughput of next-generation WLAN standards, chipsets and products, and not much research into reducing jitter.

Thus, the challenge faced is how to utilize and expand mainstream WLAN functionality to meet the delay/jitter requirements of industry, without the need to customize hardware at the level of chips.

### Summary of the invention

A brief summary of the present invention is given below, to provide a basic understanding of some aspects of the present invention. It should be understood that this is not an exhaustive summary of the present invention. It is not intended to specify key or important parts of the present invention, nor is it intended to define the scope of the present invention. Its sole purpose is to set out some concepts in simplified form, as a preamble to the more detailed description given later.

In view of the above, the present disclosure proposes a WLAN communication method using a broadcast/multicast IPCF mechanism, wherein an access point can send a polling request message to multiple clients simultaneously, thus saving a large amount of channel access time; a greater number of clients can be supported, and communication jitter is further reduced.

According to an aspect of the present disclosure, a WLAN communication method is provided, comprising:
an access point sending a polling request message simultaneously to one or more client among clients associated therewith;
the access point sequentially receiving a polling response message sent by the one or more client;
upon receiving each polling response message, the access point sending an ACK acknowledgement message to the corresponding client; and
when the access point has received the polling response messages of all of the clients or a preset latest response time of the last client is reached, repeating the above operations, starting with the access point sending a polling request message to a client.

Optionally, in an example of the aspect above, the polling request message comprises a respective mac address of the one or more client.

Optionally, in an example of the aspect above, the polling request message further comprises: data to be sent to the one or more client by the access point.

According to another aspect of the present disclosure, a WLAN communication method is provided, comprising:
a client receiving a polling request message from an access point;
the client sending, within a response time window thereof, a polling response message to the access point, wherein
if the client is a 1^{st} client among all clients to receive the polling request message of the access point, the response time window starts at the moment of receiving the polling request message and ends at a preset latest response time of the 1^{st} client;
if the client is an Nth client, the response time window starts at the moment of the client observing an ACK acknowledgement message of an (N-1)th client or when a preset latest response time of the (N-1)th client is reached, and ends when a preset latest response time of the Nth client is reached, wherein N > 1 and N ≤ M, where M is the total number of clients to be polled by the access point;
the client receiving an ACK acknowledgement message from the access point.

Optionally, in an example of the aspect above, the polling request message comprises mac addresses of all of the clients, and the client determines its order of sending the polling response message among all of the clients according to the mac addresses, and determines a preset latest response time of the client according to the order.

According to another aspect of the present disclosure, a WLAN communication method is provided, comprising:
an access point sending a polling request message simultaneously to one or more client among clients associated therewith;
a client sending, within a response time window thereof, a polling response message to the access point sequentially, wherein
if the client is a 1^{st} client among all clients to receive the polling request message of the access point, the response time window starts at the moment of receiving the polling request message and ends at a preset latest response time of the 1^{st} client;
if the client is an Nth client, the response time window starts at the moment of observing an ACK acknowledgement message of an (N-1)th client or when a preset latest response time of the (N-1)th client is reached, and ends when a preset latest response time of the Nth client is reached, wherein N > 1 and N ≤ M, where M is the total number of clients to be polled by the access point;
upon receiving a polling response message of a client, the access point sending an ACK acknowledgement message to the client;
when the access point has received the polling response messages of all of the clients or a preset latest response time of the last client is reached, repeating the above operations, starting with the access point sending a polling request message to a client.

According to another aspect of the present disclosure, a wireless access point is provided, comprising:
a polling request sending unit, configured to send a polling request message simultaneously to one or more client among clients associated therewith;
a polling response receiving unit, configured to sequentially receive a polling response message sent by the one or more client;
an ACK sending unit, configured to send, upon receiving each polling response message, an ACK acknowledgement message to the corresponding client; and
a repetition control unit, configured to control the polling request sending unit, when the polling response messages of all of the clients have been received or a preset latest response time of the last client is reached, to send the next polling request message.

According to another aspect of the present disclosure, a client is provided, comprising:
a polling request receiving unit, configured to receive a polling request message from an access point;
a polling response sending unit, configured to send a polling response message to the access point within a response time window of the client, wherein
if the client is a 1^{st} client among all clients to receive the polling request message of the access point, the response time window starts at the moment of receiving the polling request message and ends at a preset latest response time of the 1^{st} client;
if the client is an Nth client, the response time window starts at the moment of observing an ACK acknowledgement message of an (N-1)th client or when a preset latest response time of the (N-1)th client is reached, and ends when a preset latest response time of the Nth client is reached, wherein N > 1 and N ≤ M, where M is the total number of clients to be polled by the access point;
an ACK receiving unit, configured to receive an ACK acknowledgement message from the access point.

According to another aspect of the present disclosure, a computing device is provided, comprising: at least one processor; and a memory coupled to the at least one processor, the memory being used to store an instruction which, when executed by the at least one processor, causes the processor to perform the method described above.

According to another aspect of the present disclosure, a non-transitory machine-readable storage medium is provided, storing an executable instruction which, when executed, causes the machine to perform the method described above.

According to another aspect of the present disclosure, a computer program is provided, comprising a computer-executable instruction which, when executed, causes at least one processor to perform the method described above.

According to another aspect of the present disclosure, a computer program product is provided, tangibly stored on a computer-readable medium and comprising a computer-executable instruction which, when executed, causes at least one processor to perform the method described above.

The WLAN communication method according to the present disclosure, and the access point and client using the communication method to perform communication, have at least one or more of the following advantages:
- Low cost, with no need for additional hardware.
- Easy to implement, taking a unicast IPCF solution as a starting point and making modifications.
- For a given cycle time requirement, a greater number of clients can be supported; or a cycle time of a given number of clients can be reduced.
- Communication jitter is reduced.

### Brief description of the drawings

The above and other objectives, features and advantages of the present invention will be understood more easily by referring to the following description of embodiments of the present invention given in conjunction with the drawings. The components in the drawings are merely intended to show the principles of the present invention. In the drawings, identical or similar technical features or components will be indicated with identical or similar reference labels. In the drawings:
Fig. 1 is a schematic flow chart of using a basic IPCF scheduling mechanism to perform wireless communication between an access point and clients.
Fig. 2A is a flow chart of an exemplary process of a WLAN communication method based on broadcast/multicast IPCF according to an embodiment of the present disclosure.
Fig. 2B is a schematic flow chart of using the WLAN communication method according to the present disclosure to perform interactive communication between an access point and clients.
Fig. 3 is a flow chart of an exemplary process of a WLAN communication method performed at an access point according to an embodiment of the present disclosure.
Fig. 4 is a flow chart of an exemplary process of a WLAN communication method performed at a client according to an embodiment of the present disclosure.
Fig. 5 shows a block diagram of an exemplary configuration of an access point used to perform the WLAN communication method shown in Fig. 3.
Fig. 6 shows a block diagram of an exemplary configuration of a client used to perform the WLAN communication method shown in Fig. 4.
Fig. 7 shows a block diagram of a computing device used to realize a WLAN communication method according to an embodiment of the present disclosure.

Key to the drawings:
12, 22: access point
14, 16, 18, 24, 26, 28: client
1001, 2001: polling request message
1002: ACK acknowledgement message of client to access point
1003, 2003: polling response message
1004, 2004: ACK acknowledgement message of access point to client
200, 300, 400: WLAN communication method
S202, S204, S206, S208, S302, S304, S306, S308, S402, S404,
S406: steps
500: access point
502: polling request sending unit
504: polling response receiving unit
506: ACK sending unit
508: repetition control unit
600: client
602: polling request receiving unit
604: polling response sending unit
606: ACK receiving unit
700: computing device
702: processor
704: memory

### Detailed description of the invention

The subject matter described herein is now discussed with reference to exemplary embodiments. It should be understood that the sole purpose of discussing these embodiments is to enable those skilled in the art to better understand and thereby implement the subject matter described herein, without limiting the protection scope, applicability or examples expounded in the claims. Changes may be made to the functions and arrangement of the discussed elements without departing from the scope of protection of the content of the present disclosure. Various processes or components may be omitted from, replaced in or added to the examples as required. For example, the described method may be performed in a different order from that described, and various steps may be added, omitted or combined. Furthermore, features described in relation to some examples may also be combined in other examples.

As used herein, the term "comprising" and variants thereof denote open terms meaning "including but not limited to". The term "based on" means "at least partly based on". The terms "one embodiment" and "an embodiment" mean "at least one embodiment". The term "another embodiment" means "at least one other embodiment". The terms "first", "second", etc. may denote different or identical objects. Other definitions may be included below, whether explicit or implicit. Unless clearly specified in the context, the definition of a term is the same throughout the description.

The 802.11 standard specifies an operating mode called PCF (Point Coordination Function), wherein channel access is arranged by an access point (AP) in a definite manner. However, this mode has not been widely accepted, so is not supported by any associated WLAN chipset. Conversely, the DCF (Distributed Coordination Function) mode based on contention, and variants evolved therefrom, are widely used.

To reduce jitter, determinate WLAN (Wireless Local Area Network) communication is provided for the industrial field; at present, there is a simple scheduling mechanism called IPCF (Industrial Point Coordination Function), which operates in the "upper level" of DCF, and is based on polling request/polling response messages.

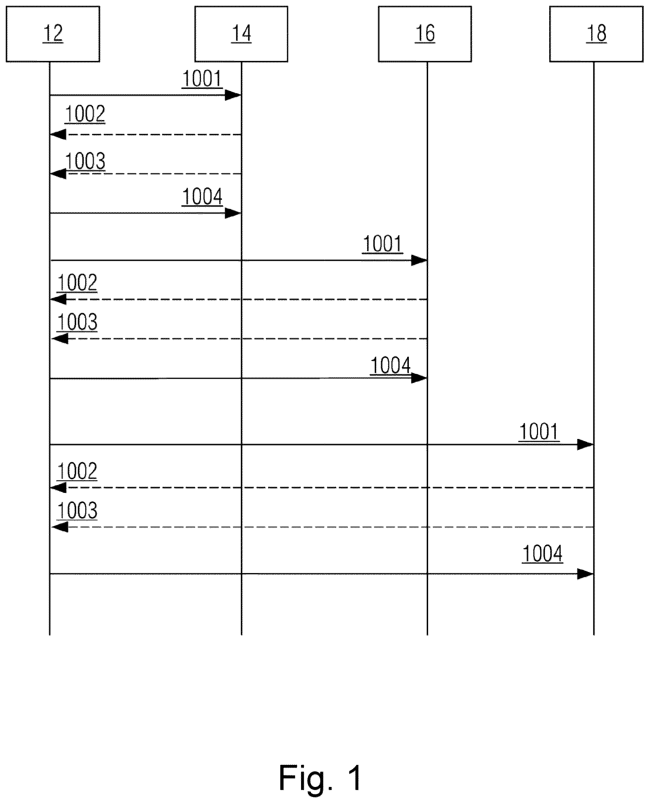

Fig. 1 shows a schematic flow chart of using a basic IPCF scheduling mechanism to perform wireless communication between an access point and clients.

In a basic IPCF scheduling mechanism, a WLAN client does not take the initiative to send a data packet; it only sends a data packet when polled by a WLAN access point.

In Fig. 1, firstly, an access point 12 sends a polling request message 1001 to a first client 14, and awaits a polling response message of the client for a preset maximum waiting time, wherein the polling request message may comprise downlink data (if present), and the polling response message may comprise uplink payload data (if present).

After receiving the polling request message, the first client 14 first sends an ACK acknowledgement message 1002 to the access point 12, and then sends a polling response message (uplink data message) 1003 to the access point 12.

After the access point 12 receives the polling response message of the first client 14, the access point 12 sends an ACK acknowledgement message 1004 to the first client 14.

After the access point 12 receives the polling response message of the first client 14, of if the access point 12 has not received a polling response message of the first client within the maximum waiting time, the access point 12 will send a polling request message to the next client.

In Fig. 1, the solid arrows represent messages sent by the access point to clients, and dotted arrows represent messages sent by the clients to the access point.

The access point 12 repeats the polling request/polling response process for the other associated clients (a second client 16 and a third client 18 in Fig. 1) one by one.

Using such a method, access points and clients still need to contend with other devices for channel access rights before data transmission (for example, other access points using the same channel and clients associated therewith), but conflict in contention for channel access can already be greatly reduced. Especially in environments where the use of radio frequencies can be controlled (e.g. in factories), such conflict in contention for channel access can be avoided completely. Such a scheduling solution greatly reduces the indeterminacy of random channel access time, and works very well in the absence of external interference, with greatly reduced jitter in communication between the AP and the clients.

In such a solution based on sequential polling one by one, the maximum number of clients that a single access point can support is very limited, because a certain cycle time (the time taken for the access point to poll all of the clients once) is predefined. For example: if the process of the access point sending a polling request to a client and receiving a polling response takes 2 ms, then a maximum of 8 clients can be supported with a cycle time of 16 ms.

To solve this problem, based on the IPCF scheduling solution described above, in the technical solution of the present disclosure, a unicast polling request is modified to a broadcast/multicast polling request. All associated clients can simultaneously receive a broadcast/multicast polling request message from the AP, and then send polling response messages to the AP one by one. In the present disclosure, such a scheduling solution is called broadcast/multicast IPCF.

In the present disclosure, the terms "AP" and "access point" mean a wireless access point in a WLAN network, and the terms "AP" and "access point" may be used interchangeably.

A WLAN communication method based on broadcast/multicast IPCF according to embodiments of the present disclosure is described below with reference to the drawings.

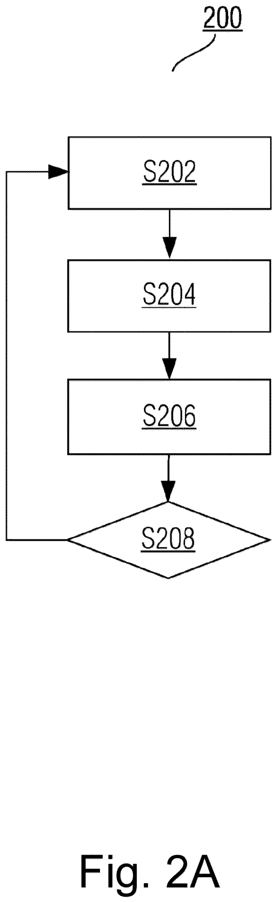

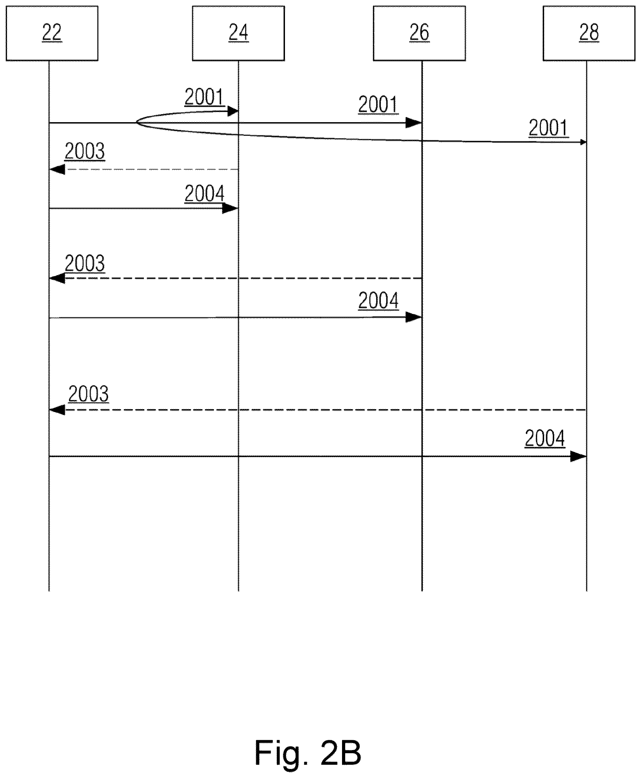

Fig. 2A is a flow chart of an exemplary process of a WLAN communication method 200 based on broadcast/multicast IPCF according to an embodiment of the present disclosure; Fig. 2B is a schematic flow chart of using the WLAN communication method according to the present disclosure to perform interactive communication between one access point and three clients.

For simplicity, only 3 clients have been displayed in Fig. 2B; in fact, any number of clients may be included as required in the communication method according to the present disclosure. In Fig. 2B, the solid arrows represent messages sent to the clients by the access point, and dotted arrows represent messages sent to the access point by the clients.

The WLAN communication method based on broadcast/multicast IPCF according to an embodiment of the present disclosure is described below, referring to Figs. 2A and 2B at the same time.

Firstly, in box S202 of Fig. 2A, an access point 22 sends a polling request message simultaneously to one or more clients 24, 26 and 28 among clients associated therewith.

The polling request message 2001 in Fig. 2B may be broadcast or multicast, i.e. the polling request message 2001 may be sent to all clients, or to a portion of clients which the access point wishes to poll. For example: supposing that the access point is associated with a total of 8 clients, then the access point may poll all 8 clients at the same time, or poll only 4 of them at the same time. If the access point only wishes to poll 4 clients, the content of the broadcast/multicast polling request message need only comprise downlink data of the 4 clients.

Information in the broadcast/multicast polling request message 2001 at least comprises a mac address of each client. Optionally, it may further comprise downlink data (if present) to be sent to the client by the access point.

Next, in box S204, the clients 24, 26 and 28 sequentially send, within response time windows thereof, polling response messages to the access point 22.

After the clients receive the broadcast/multicast polling request message, the clients 24, 26 and 28 begin to send the polling response messages 2003 to the access point sequentially. The order of sending may be obtained from a sequence of client mac addresses in the broadcast/multicast polling request message. For a particular client, the response time window for sending the polling response message to the access point will be determined by the following rules.
- each client has a predefined, preset latest response time for sending the polling response message; for example, a simple method of defining the preset latest response time may be as follows: if it is predefined that one client needs a response time of 2 ms, then the latest response time of the Nth client is 2*N ms. Each client will monitor/calculate the response time of the previous client.

Those skilled in the art will understand that the preset latest response time may be specified by the access point, or may be calculated by the client on the basis of the order thereof among all of the clients, client configuration parameters, specific algorithms and other factors. In the present disclosure, no restrictions are imposed on the way in which the preset latest response time of each client is determined; no further detailed description is given here.
- The response time window of the 1^{st} client begins to be calculated from the moment of receiving the broadcast/multicast polling request message. For each subsequent client, its respective response time window will begin when said client observes that the previous client receives an ACK acknowledgement message sent by the access point or when the latest response time of the previous client has been reached (timeout). For example, the response time of the 2^{nd} client will begin at the moment when it observes that the 1st client receives an ACK acknowledgement message sent by the access point, or (in the case where the access point has not sent an ACK acknowledgement message or the 2^{nd} client has not observed an ACK acknowledgement message) begins when the response time of the 1^{st} client reaches the preset latest response time (2 ms for the 1^{st} client) .
- The response time window for any client will end upon timeout of its preset latest response time.
- Upon receiving the polling request message of the access point, the 1^{st} client immediately sends the polling response message to the access point, without any delay.
- The 2^{nd} client sends a polling response to the access point upon detecting, according to the above rules, that a response time period of the 1^{st} client has ended. Here, "response time period" refers to the moment when the client in question observes that the previous client receives the ACK acknowledgement message sent by the access point, or the response time of the previous client reaches the preset latest response time.
- The 3^{rd} client may send a polling response to the access point upon detecting that a response time period of the 2^{nd} client has ended.
- The Mth client may send a polling response to the access point upon detecting that a response time period of the (M-1)th client has ended. Here, M is the total number of all of the clients to be polled by the access point.

To summarize, if the client is the 1^{st} client among all the clients to receive the polling request message of the access point, the response time window starts at the moment of receiving the polling request message and ends at the preset latest response time of the 1^{st} client;
if the client is the Nth client, the response time window starts at the moment of observing the ACK acknowledgement message of the (N-1)th client or when the preset latest response time of the (N-1)th client is reached, and ends when the preset latest response time of the Nth client is reached, where N denotes any one of the 2^{nd} to the last clients, i.e. N > 1 and N ≤ M, where M is the total number of clients to be polled by the access point.

In box S206, upon receiving a polling response message of a client, the access point 22 sends an ACK acknowledgement message to said client.

It can be seen from Fig. 2B that in a normal situation, upon receiving the polling response message of each client, the access point 22 will send an ACK acknowledgement message 2004 to said client. In an abnormal situation, it may happen that a client does not receive an ACK message sent by the access point or the access point does not send an ACK acknowledgement message due to not receiving a polling response message of a client.

Finally, in box S208, when the access point has received the polling response messages of all of the clients or detects that the response time window of the last client has ended, i.e. when the preset latest response time of the Mth client is reached, the access point may begin sending the next broadcast/multicast polling request message, i.e. the operations of S202, S204 and S206 in the boxes are repeated.

The WLAN communication method according to the present disclosure uses a broadcast/multicast IPCF mechanism, wherein, in contrast to a unicast IPCF mechanism, the access point can send a polling request message to multiple clients simultaneously, thus saving a large amount of channel access time; a greater number of clients can be supported, and communication jitter is further reduced.

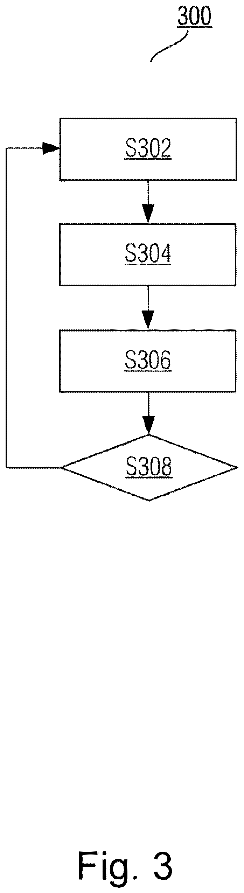

The WLAN communication method based on broadcast/multicast IPCF according to an embodiment of the present disclosure as shown in Fig. 2 involves two aspects, namely an access point and clients. The operating steps performed by the access point are shown in Fig. 3. Fig. 3 is a flow chart of an exemplary process of a WLAN communication method 300 performed at the access point according to an embodiment of the present disclosure, the method specifically comprising:
First, in S302, the access point simultaneously sends a polling request message to one or more client among clients associated therewith.

Next, in S304, the access point sequentially receives a polling response message sent by the one or more client.

In S306, upon receiving each polling response message, the access point sends an ACK acknowledgement message to the corresponding client.

In S308, when the access point has received the polling response messages of all of the clients or the preset latest response time of the last client is reached, the access point sends the next broadcast/multicast polling request message, and repeats the above operations, i.e. repeats the operations in boxes S302, S304 and S306.

The polling request message comprises a respective mac address of the one or more client.

Optionally, the polling request message may further comprise data to be sent to the one or more client by the access point.

That is to say, the polling request message sent to the clients by the access point may only comprise mac addresses, but if there is downlink data to be sent to the clients, the polling request message may also comprise the downlink data.

The meaning of "response time window" is as stated above, so is not stated again here.

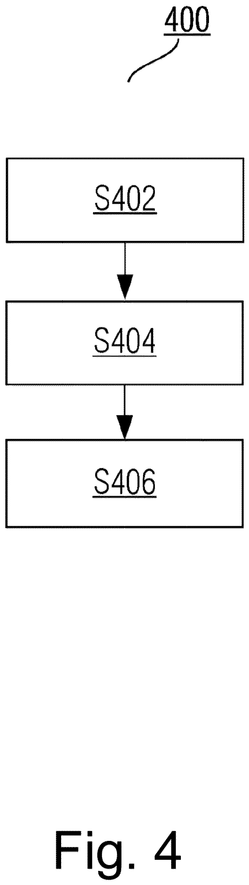

The operating steps performed by the access point in the process of the access point and the clients using the WLAN communication method according to the present disclosure to perform communication have been described above with reference to Fig. 3. The operating steps performed by the clients are shown in Fig. 4. Fig. 4 is a flow chart of an exemplary process of a WLAN communication method 400 performed at a client according to an embodiment of the present disclosure, the method specifically comprising:
In S402, the client receives a polling request message from an access point.

In S404, the client sends, within a response time window thereof, a polling response message to the AP, wherein:
if the client is the 1st client among all the clients to receive the polling request message of the access point, the response time window starts at the moment of receiving the polling request message and ends at the preset latest response time of the 1st client;
if the client is the Nth client, the response time window starts at the moment of the client observing the ACK acknowledgement message of the (N-1)th client or when the preset latest response time of the (N-1)th client is reached, and ends when the preset latest response time of the Nth client is reached, wherein N > 1 and N ≤ M, where M is the total number of clients to be polled by the access point.

That is to say, a client needs to detect a response end event of the client preceding it, i.e. reception by the previous client of an ACK acknowledgement message sent by the access point, and has no interest in data of the client preceding it. Upon observing that the previous client has received the ACK acknowledgement message, the client in question can send its own polling response message.

However, the latest response time of this time window will not be affected by the actual response time of the preceding client; that is to say, the response time of a client may be advanced, but the latest response time is a fixed time determined in advance.

In S406, the client receives an ACK acknowledgement message from the access point.

The polling request message comprises mac addresses of all of the clients, and the client can determine its order of sending the polling response message among all of the clients according to the mac addresses, and determine the preset latest response time of the client according to the order.

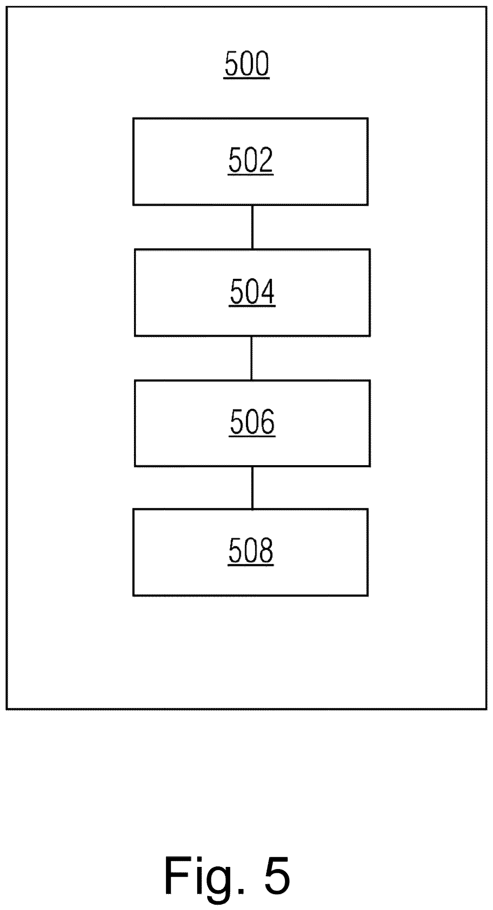

Fig. 5 shows a block diagram of an exemplary configuration of an access point 500 used to perform the WLAN communication method shown in Fig. 3. In Fig. 5, the access point 500 comprises: a polling request sending unit 502, a polling response receiving unit 504, an ACK sending unit 506 and a repetition control unit 508.

The polling request sending unit 502 is configured to send a polling request message simultaneously to one or more client among clients associated therewith.

The polling response receiving unit 504 is configured to sequentially receive a polling response message sent by the one or more client.

The ACK sending unit 506 is configured to send, upon receiving each polling response message, an ACK acknowledgement message to the corresponding client.

The repetition control unit 508 is configured to control the polling request sending unit, when the polling response messages of all of the clients have been received or a preset latest response time of the last client is reached, to send the next polling request message.

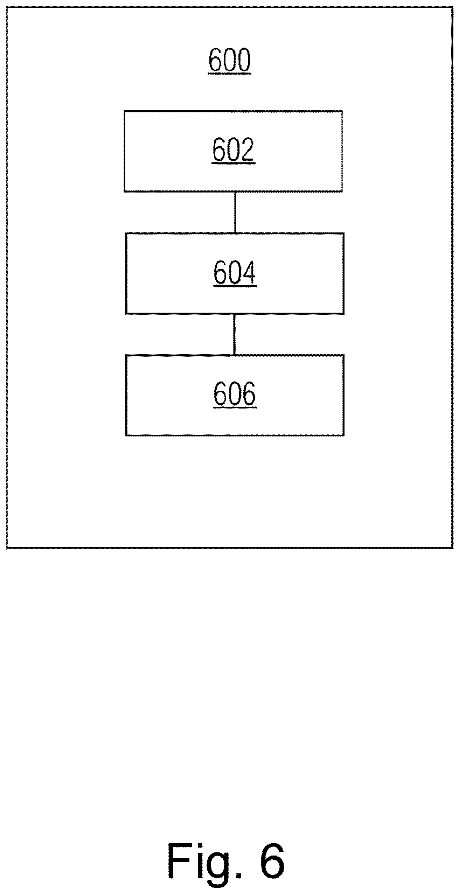

Fig. 6 shows a block diagram of an exemplary configuration of a client 600 used to perform the WLAN communication method shown in Fig. 4. In Fig. 6, the client 600 comprises: a polling request receiving unit 602, a polling response sending unit 604 and an ACK receiving unit 606.

The polling request receiving unit 602 is configured to receive a polling request message from an access point.

The polling response sending unit 604 is configured to send a polling response message to the access point within a response time window of the client.

If the client is the 1st client among all the clients to receive the polling request message of the access point, the response time window starts at the moment of receiving the polling request message and ends at the preset latest response time of the 1st client; if the client is the Nth client, the response time window starts at the moment of observing an ACK acknowledgement message of the (N-1)th client or when the preset latest response time of the (N-1)th client is reached, and ends when the preset latest response time of the Nth client is reached, wherein N > 1 and N ≤ M, where M is the total number of clients to be polled by the access point.

The ACK receiving unit 608 is configured to receive an ACK acknowledgement message from the access point.

It should be explained that the structures of the access point 500 shown in Fig. 5 and the client 600 shown in Fig. 6 and their component units are merely exemplary, and those skilled in the art will be able to modify the structural block diagrams shown in Figs. 5 and 6 as required.

The details of the operations and functions of the various parts of the access point 500 and the client 600 may for example be the same as, or similar to, the relevant parts of the embodiments of the WLAN communication method of the present disclosure described with reference to Figs. 1 - 4, so are not described in detail again here.

The WLAN communication method according to the present disclosure, and the access point and client using the communication method to perform communication, have at least one or more of the following advantages:
- Low cost, with no need for additional hardware.
- Easy to implement, taking a unicast IPCF solution as a starting point and making some modifications.
- For a given cycle time requirement, a greater number of clients can be supported; or a cycle time of a given number of clients can be reduced.
- Communication jitter is reduced.

The WLAN communication method according to embodiments of the present disclosure, and embodiments of the access point and client, have been described above with reference to Figs. 1 - 6. The various units of the access point and client described above may be realized with hardware, software, or a combination of hardware and software.

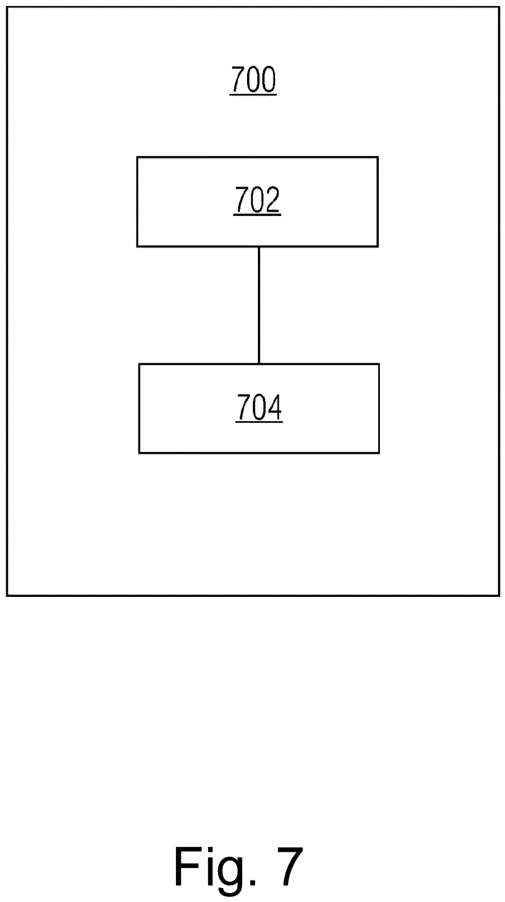

Fig. 7 shows a block diagram of a computing device 700 used to realize a WLAN communication method according to an embodiment of the present disclosure. According to an embodiment, the computing device 700 may comprise at least one processor 702, the processor 702 executing at least one computer-readable instruction (i.e. the abovementioned element realized in the form of software) stored or encoded in a computer-readable storage medium (i.e. a memory 704).

In an embodiment, the memory 704 stores a computer-executable instruction which, when executed, enables the at least one processor 702 to fulfil an operation performed by an access point. In addition, the memory 704 may also store a computer-executable instruction capable of causing the processor 702 to fulfil an operation performed by a client.

It should be understood that computer-executable instructions stored in the memory 704, when executed, cause the at least one processor 702 to perform various operations and functions described above with reference to Figs. 1 - 6 in various embodiments of the present disclosure.

According to an embodiment, a non-transitory machine-readable medium is provided. The non-transitory machine-readable medium may have a machine-executable instruction (i.e. the abovementioned element realized in the form of software) which, when executed by a machine, causes the machine to execute various operations and functions described above with reference to Figs. 1 - 6 in various embodiments of the present disclosure.

According to an embodiment, a computer program is provided, comprising a computer-executable instruction which, when executed, causes at least one processor to execute various operations and functions described above with reference to Figs. 1 - 6 in various embodiments of the present disclosure.

According to an embodiment, a computer program product is provided, comprising a computer-executable instruction which, when executed, causes at least one processor to execute various operations and functions described above with reference to Figs. 1 - 6 in various embodiments of the present disclosure.

The specific implementations expounded above with reference to the drawings describe exemplary embodiments, but do not represent all embodiments that can be realized or that fall within the scope of protection of the claims. The term "exemplary" used throughout this Description means "serving as an example, instance or illustration", and does not mean "preferred" or "advantageous" compared to other embodiments. In order to provide an understanding of the technologies described, specific embodiments include specific details. However, these technologies may be implemented in the absence of these specific details. In some instances, to avoid making the concepts of the described embodiments difficult to understand, well known structures and apparatuses are shown in the form of block diagrams.

The above description of the content of the present disclosure is provided to enable any person skilled in the art to realize or use the content of the present disclosure. To a person skilled in the art, various modifications to the content of the present disclosure will be obvious, and the general principles defined herein may be applied to other variants without departing from the scope of protection of the content of the present disclosure. Thus, the content of the present disclosure is not limited to the examples and designs described herein, but is consistent with the broadest scope conforming to the principles and novel features disclosed herein.

The above are merely preferred embodiments of the present invention, which are not intended to limit it. Any modifications, equivalent substitutions or improvements, etc. made within the spirit and principles of the present invention should be included in the scope of protection thereof.

## Claims

1. A WLAN communication method, comprising:
an access point sending a polling request message simultaneously to one or more client among clients associated therewith;
the access point sequentially receiving a polling response message sent by the one or more client;
upon receiving each polling response message, the access point sending an ACK acknowledgement message to the corresponding client; and
when the access point has received the polling response messages of all of the clients or a preset latest response time of the last client is reached, repeating the above operations, starting with the access point sending a polling request message to a client.

2. The method as claimed in claim 1, wherein
the polling request message comprises a respective mac address of the one or more client.

3. The method as claimed in claim 1, wherein
the polling request message further comprises: data to be sent to the one or more client by the access point.

4. A WLAN communication method, comprising:
a client receiving a polling request message from an access point;
the client sending, within a response time window thereof, a polling response message to the access point, wherein
if the client is a 1^{st} client among all clients to receive the polling request message of the access point, the response time window starts at the moment of receiving the polling request message and ends at a preset latest response time of the 1^{st} client;
if the client is an Nth client, the response time window starts at the moment of the client observing an ACK acknowledgement message of an (N-1)th client or when a preset latest response time of the (N-1)th client is reached, and ends when a preset latest response time of the Nth client is reached, wherein N > 1 and N ≤ M, where M is the total number of clients to be polled by the access point;
the client receiving an ACK acknowledgement message from the access point.

5. The method as claimed in claim 4, wherein
the polling request message comprises mac addresses of all of the clients, and the client determines its order of sending the polling response message among all of the clients according to the mac addresses, and determines a preset latest response time of the client according to the order.

6. A WLAN communication method, comprising:
an access point sending a polling request message simultaneously to one or more client among clients associated therewith;
a client sending, within a response time window thereof, a polling response message to the access point sequentially, wherein
if the client is a 1^{st} client among all clients to receive the polling request message of the access point, the response time window starts at the moment of receiving the polling request message and ends at a preset latest response time of the 1^{st} client;
if the client is an Nth client, the response time window starts at the moment of observing an ACK acknowledgement message of an (N-1)th client or when a preset latest response time of the (N-1)th client is reached, and ends when a preset latest response time of the Nth client is reached, wherein N > 1 and N ≤ M, where M is the total number of clients to be polled by the access point;
upon receiving a polling response message of a client, the access point sending an ACK acknowledgement message to the client;
when the access point has received the polling response messages of all of the clients or a preset latest response time of the last client is reached, repeating the above operations, starting with the access point sending a polling request message to a client.

7. A wireless access point, comprising:
a polling request sending unit, configured to send a polling request message simultaneously to one or more client among clients associated therewith;
a polling response receiving unit, configured to sequentially receive a polling response message sent by the one or more client;
an ACK sending unit, configured to send, upon receiving each polling response message, an ACK acknowledgement message to the corresponding client; and
a repetition control unit, configured to control the polling request sending unit, when the polling response messages of all of the clients have been received or a preset latest response time of the last client is reached, to send the next polling request message.

8. A client, comprising:
a polling request receiving unit, configured to receive a polling request message from an access point;
a polling response sending unit, configured to send a polling response message to the access point within a response time window of the client, wherein
if the client is a 1^{st} client among all clients to receive the polling request message of the access point, the response time window starts at the moment of receiving the polling request message and ends at a preset latest response time of the 1^{st} client;
if the client is an Nth client, the response time window starts at the moment of observing an ACK acknowledgement message of an (N-1)th client or when a preset latest response time of the (N-1)th client is reached, and ends when a preset latest response time of the Nth client is reached, wherein N > 1 and N ≤ M, where M is the total number of clients to be polled by the access point;
an ACK receiving unit, configured to receive an ACK acknowledgement message from the access point.

9. A computing device (600), comprising:
at least one processor (602); and
a memory (604) coupled to the at least one processor (602), the memory being used to store an instruction which, when executed by the at least one processor (602), causes the processor (602) to perform the method as claimed in any one of claims 1 - 6.

10. A non-transitory machine-readable storage medium, storing an executable instruction which, when executed, causes the machine to perform the method as claimed in any one of claims 1 - 6.

11. A computer program product, tangibly stored on a computer-readable medium and comprising a computer-executable instruction which, when executed, causes at least one processor to perform the method as claimed in any one of claims 1 - 6.
